# EUROPEAN PATENT APPLICATION

(11) **EP 3 450 358 A1**
(43) Date of publication of application: **06.03.2019**
(21) Application number: 18191925.9
(22) Date of filing: 31.08.2018
(51) Int. Cl.: B65G 39/073, B65G 45/10

(54) **GRAVITY CLEANING EQUIPMENT FOR A CONVEYOR BELT**

(30) Priority: 04.09.2017 CZ 2017513
(71) Applicant: Vysoká Skola Bánská - Technická Univerzita Ostrava, 708 33 Ostrava-Poruba (CZ)
(72) Inventor: Dobiá , Ji í, 70030 Ostrava, Záb eh (CZ); Rá o, Jan, 79382 T eme ná (CZ); Zegzulka, Ji í, 74714 Ludge ovice (CZ)
(74) Representative: Sedlák, Jirí

(57) **Abstract**

The gravity cleaning equipment for a conveyor belt is intended for removing undesirable material from the inner side of the bottom branch of the conveyor belt of a reverse conveyor using the force of gravity acting on material being conveyed. The equipment represents a modular system consisting of the frame (1) with the height-adjustable mechanisms (2) and the shaft (3) on which the segment body comprising the discs (4) arranged in a modular manner is located. Preferably, it may be modified by components assisting in shaping the conveyor belt (5) or facilitating material sliding off.

## Description

### Field of the Invention

The invention relates to the field of belt conveyance, in particular the maintenance of belt conveyors. The equipment is intended for removing undesirable material from the inner side of the bottom branch of the conveyor belt of a reversible belt conveyor. The equipment allows cleaning the belt off coarse particulate matter using the (terrestrial) force of gravity in both directions of the belt movement, without having to use any wiping blades or rearranging the equipment for reverse movement.

### Background of the Invention

Currently, a number of items of equipment intended for cleaning or wiping conveyor belts is available. Such items of equipment are based on various principles focused on the removal of undesirable material. One of the most commonly utilized principles of cleaning is wiping material off the belt using a blade made of an appropriate and resistant material in various shapes, which is placed in various positions along the entire width of the belt (e.g. CS8600667). The disadvantage of this type of solution is the accumulation of material in front of the wiping plate resulting in an increased resistance between the belt and the wiper that in turn leads to the increased wear of the belt, excessive load applied to the drive units and the resulting increase in operating costs.

Among the known wipers are also rotary brush rollers (e.g. KR100322032). However, these are usually positioned perpendicularly to the longitudinal axis of the belt, which means that they are not suitable for in-between belt space cleaning.

Among the other types are wipers comprised of rollers fitted with grooving (usually in the shape of a helix) that roll away along the belt surface while individual grooves move undesirable material towards the edge of the belt (e.g. RS20060602). The disadvantage of this type of equipment is that if it is used in in-between belt space, undesirable particles are not removed at the first attempt and the cleaning cycle needs to be repeated which results in increased operating costs. A solution utilizing the belt tapping off by a vibrating roller can be regarded as a modification of the equipment that utilizes a roller for belt cleaning (e.g. US4407403).

### Summary of the Invention

The aforementioned disadvantages are removed by the invention described below that discloses a design of the equipment allowing the bottom branch of the conveyor belt to be shaped in a way allowing undesirable material to be removed due to its dead weight. In such a case undesirable material refers to material being conveyed that gets to in-between belt space from the upper branch of the conveyor belt during the conveyor belt operation, accumulates on the inner side of the bottom branch of the belt and represents an increased risk of damage to the belt and the driving/tensioning drum, and if the worst comes to the worst also a risk of fire due to undesirable friction between the entrapped material and the belt.

The invention is designed as a modular system whose core is represented by a specially designed segment body made of an appropriate material such as technical polymers or appropriate metal alloys. This body is placed in a frame and shapes the conveyor belt in its transverse plane thus allowing material transfer. The main part of the equipment - the segment body is positioned from the outer part of the bottom branch of the conveyor belt and supports the belt in its centre. The edges of the belt supported in this manner form gravity surfaces allowing undesirable material to slide off the belt. The segment body consists of discs with various diameters that are mounted as running fits on a shaft. The shaft is connected on both its ends to height-adjustable mechanisms that are anchored in the frame.

The discs comprising the segment body can be arranged with their diameters decreasing from the centre towards the edges.

Preferably, holding arms with holding rollers assisting in attaining a more precise shaping of the gravity surfaces of the conveyor belt can be attached to the frame. Another advantage can be presented by the anti-vibration insulation of the frame protecting the conveyor belt structure against vibrations resulting from the use of a vibrator mounted on the frame. The vibrator then allows the conveyor belt to be cleaned off very adhesive materials.

The segment body according to the invention thus combines the advantages of rotary wipers rolling away along the conveyor belt and those of blade wipers. Thanks to the use of rotary components, this solution has a lower resistance than wipers using blades for wiping. On the one hand, the equipment is able to remove undesirable particles at the first attempt upon the belt passage through the mechanism, and on the other hand, no accumulation of undesirable material in front of the equipment occurs. The deflection of the bottom branch of the belt follows the contours of the upper branch which eliminates excessive wear due to the belt alternating bending over on both sides. The advantage of this structure is the reduced load applied on the conveyor belt and its resulting wear along with the increased efficiency of wiping and centring the belt while retaining all parameters during its reverse motion.

The aforementioned equipment is placed in a suitable position along the length of the belt and when undesirable material passes the position it is diverted from the in-between belt space and can be returned to the conveyance process.

### Explanation of Drawings

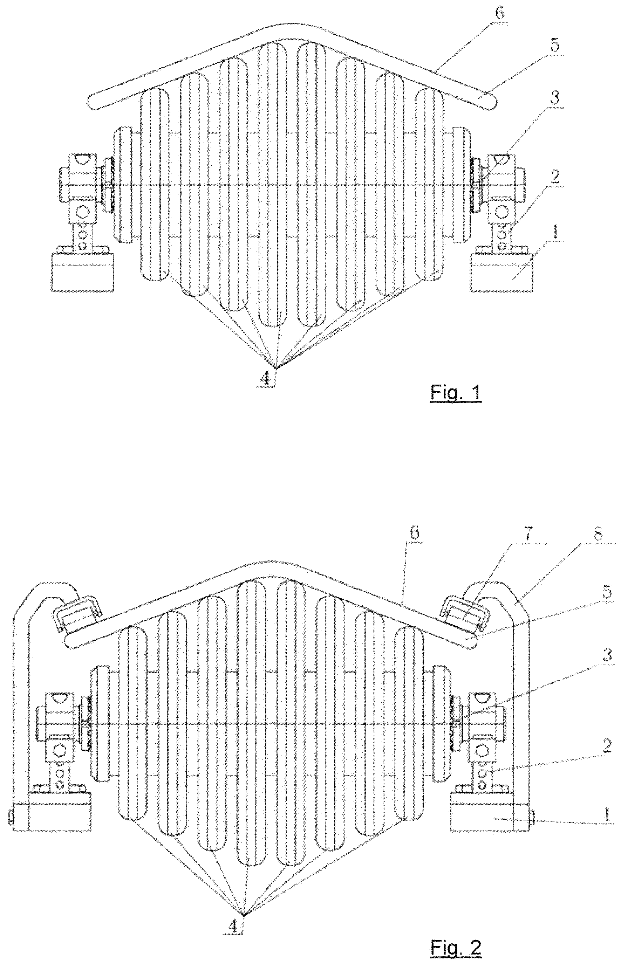

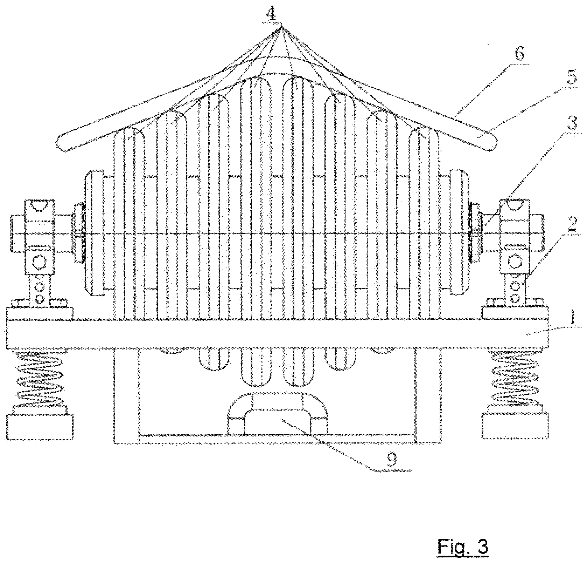

Figure 1 shows the equipment described in the example of embodiment 1. Figure 2 shows the equipment described in the example of embodiment 2. Figure 3 shows the example of embodiment 3.

### Examples of the Invention Embodiments

### Example 1

The segment body is used for the gravity cleaning of the conveyor belt 5. Cleaning of the belt 5 is executed by shaping the transverse profile of the belt 5 by the segment body and due to the (terrestrial) force of gravity. The segment body consists of the discs 4 with four different diameters mounted as running fits on the shaft 3. The conveyor belt 5 runs above the segment body and is supported by the segment body in its centre while the edges of the belt 5 are bent by their dead weight along the cross-section of the segment body and form gravity surfaces 6 along which undesirable material slides off the conveyor belt 5. The shaft 3 is mounted in the height-adjustable mechanisms 2 for the height-adjustment of the segment body in respect of the conveyor belt 5. The height-adjustable mechanisms 2 are installed on the frame 1 by which the equipment is attached to the structure of the conveyor belt.

### Example 2

Example 2 differs from example 1 in that the equipment includes the holding rollers 7 that assist in shaping the conveyor belt 5 correctly along the cross-sections of the discs 4 of the segment body. The holding rollers 7 are installed on each holding arm 8 that is fitted on the frame 1 on both sides of the conveyor belt 5. The advantage of this solution is the possibility to use the equipment for conveyor belts 5 with higher rigidity, or where applicable to attain steeper gravity surfaces 6.

### Example 3

Example 3 differs from the foregoing examples in that it also includes an added vibrator 9 that is firmly attached to the frame 1 and increases the efficiency of the conveyor belt 9 cleaning. The structure of the conveyor belt is insulated from vibrations of the frame 1. The advantage of this solution is the possibility to use the equipment to clean the conveyor belt 5 off even more adhesive undesirable materials.

### Industrial Applicability

The equipment can be used in the field of particulate matter conveyance. In particular in the case of conveyance with the use of conveyor belts, for the construction of new conveyor routes, etc.

## Claims

1. The gravity cleaning equipment for a conveyor belt located from the outer part of the bottom branch of the conveyor belt (5) so that it supports the conveyor belt in its centre with the edges of the conveyor belt forming gravity surfaces (6), **characterized in that** the equipment is a modular system comprising the frame (1) equipped with two height-adjustable mechanisms (2) connected by the shaft (3) on which the discs (4) of different diameters forming the segment body are mounted as running fits.

2. The gravity cleaning equipment for a conveyor belt according to claim 1 **characterized in that** the frame (1) is fitted with the holding arms (8) equipped with holding rollers (7) to shape the gravity surfaces (6) of the conveyor belt (5).

3. The gravity cleaning equipment for a conveyor belt according to claim 1 or 2 **characterized in that** the frame (1) includes the vibrator (9).
